# EUROPEAN PATENT APPLICATION

(11) **EP 4 807 414 A1**
(43) Date of publication of application: **16.09.2026**
(21) Application number: 24889057.6
(22) Date of filing: 04.11.2024
(51) Int. Cl.: G02B 6/245, G02B 6/255, G02B 6/02

(54) **MULTI-CORE OPTICAL FIBER WAVELENGTH-SELECTIVE OPTICAL COUPLER**

(30) Priority: 10.11.2023 KR 20230155024
(71) Applicant: KS Photonics Inc., Daejeon 34025 (KR)
(72) Inventor: KIM, Byoung Yoon, Seoul 03168 (KR); KO, Jaekwon, Sejong 30092 (KR); PARK, Kyung Jun, Seoul 05672 (KR); LEE, Jae Hyeon, Daejeon 34333 (KR)
(74) Representative: Eisenführ Speiser
(86) International application number: PCT/KR2024/017156
(87) International publication number: WO 2025/100869

(57) **Abstract**

A multi-core optical fiber wavelength-selective optical coupler according to the present invention includes a multi-core optical fiber and a coupling optical fiber, and uses the coupling optical fiber having optical propagation characteristics different from those of the multi-core optical fiber, so that propagation constants of cores of the two optical fibers match at a wavelength to be coupled in an optical coupling region and significantly differ in a wavelength region in which coupling is to be avoided. Accordingly, the multi-core optical fiber wavelength-selective optical coupler can be implemented with lower loss and higher yield than in the conventional art.

## Description

### [TECHNICAL FIELD]

The present invention relates to a wavelength-selective optical coupler, which is an optical device applicable to optical communications and optical sensors using multi-core optical fibers.

### [BACKGROUND ART]

A wavelength-selective optical coupler is an optical device that uses optical fibers as input/output ends and, with respect to input light having a plurality of wavelengths, provides high optical coupling of light at a specific wavelength (wavelength 1) to a specific output end, while providing low optical coupling of light at another wavelength (wavelength 2) at the specific output end and high optical coupling at an output end different from the specific output end. Here, a high optical coupling ratio generally means optical coupling of 90% or more, and low optical coupling means optical coupling of 10% or less.

There are various types of optical fiber wavelength-selective optical couplers (hereinafter, wavelength-selective optical couplers), representative examples of which include a free-space type and an all-fiber type. The free-space type uses optical fibers as input/output ends, but extracts light into free space between the ends and implements wavelength selectivity using a filter or the like. The all-fiber type uses the principle that optical coupling occurs between a plurality of optical fiber cores located in close proximity, without extracting optical signals into free space. The device according to the present invention is of the all-fiber type, and has advantages of a simpler structure and lower insertion loss than the free-space type.

There are various methods for manufacturing an all-fiber optical fiber coupler, and Non-Patent Document 1 and Patent Document 1 describe an all-fiber optical fiber coupler manufactured by placing two optical fibers side by side and melting and stretching the optical fibers at a high temperature until predetermined wavelength selectivity is achieved (tapering method).

In addition, as described in Patent Document 2, there is also a device that induces optical coupling by polishing side surfaces of two optical fibers and arranging the optical fiber cores close to each other such that a distance between the cores is about several micrometers, and that implements a wavelength selection function by using the periodicity of optical coupling and the wavelength-dependent intensity of optical coupling.

Meanwhile, as part of efforts to increase data transmission efficiency in optical communications, a multi-core optical fiber having a plurality of cores in one strand of optical fiber has been developed, and many research and development efforts and practical-application attempts have been made [Non-Patent Document 2]. Various types of optical devices are required in order to use multi-core optical fibers, and in particular, wavelength-selective coupling devices for multi-core optical fibers are required in order to implement multi-core optical amplifiers.

Among methods for implementing a multi-core optical fiber wavelength-selective coupling device, as mentioned in Non-Patent Document 3, there is a method in which a free-space optical system is installed between two multi-core optical fibers, and light of another wavelength emitted from a separate optical fiber is coupled to an output optical fiber. However, this technology causes manufacturing difficulties because it requires many parts that need fine optical alignment and has a complex structure.

Meanwhile, when the above-described tapering method is applied to a multi-core optical fiber in order to implement an all-fiber coupler that does not use a free-space optical system, the core spacing in a processed region becomes smaller and optical interference between cores increases, so that a desired function cannot be achieved.

In addition, as mentioned in Patent Document 3, there is also a method of implementing an optical coupler by chemically or mechanically processing a side surface of a multi-core optical fiber, processing a side surface of an optical fiber to be optically coupled to a selected core, and bringing the two side surfaces into close contact. In this method, because the structure of the multi-core optical fiber, such as the spacing between its cores, does not change, problems that occur in the tapering method can be avoided. Although the concept of this method is old, it has not been long since an actual implementation was publicly disclosed. The specifically implemented "all-fiber multi-core optical fiber wavelength-selective coupler" implements optical coupling using side-processed optical fibers, as described in Patent Documents 4 and 5 and Non-Patent Document 4.

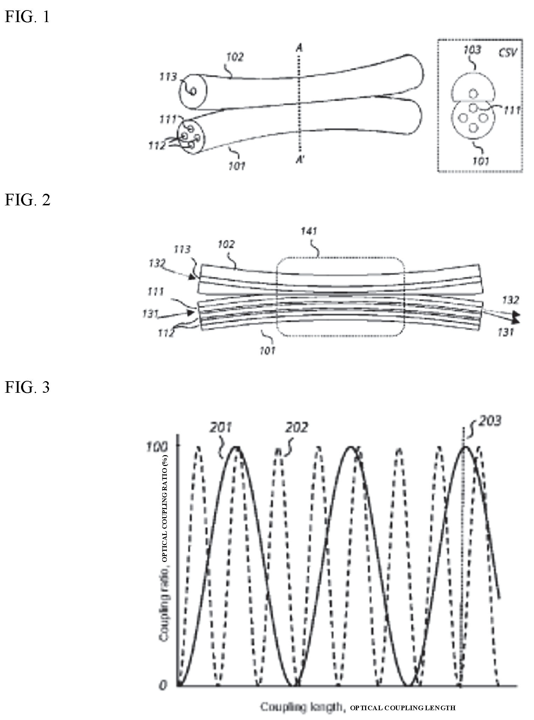

FIG. 1 conceptually illustrates a principal part of a conventional wavelength-selective optical coupler mentioned in Patent Documents 4 and 5 and Non-Patent Document 4. The wavelength-selective optical coupler according to this technology used a multi-core optical fiber 101 and a single-core optical fiber 102 to be used for coupling (hereinafter, coupling optical fiber). In fabrication of the device, an optical fiber designed so that optical propagation characteristics in a core of the multi-core optical fiber and optical propagation characteristics in a core of the coupling optical fiber are as identical as possible was used.

FIG. 2 schematically illustrates a cross-section of the principal part of the optical coupler of FIG. 1 as viewed from a side. Light 132 of wavelength 1 entering a core 113 of the single-core optical fiber 102 of the device is coupled to a selected core 111 of the multi-core optical fiber 101 in an optical coupling region 141 and propagates. Meanwhile, light 131 of wavelength 2 entering the selected core 111 of the multi-core optical fiber passes through the optical coupling region and propagates through the same core.

The wavelength selectivity of this device is implemented by using the wavelength dependence of optical coupling intensity for wavelength 1 and wavelength 2. FIG. 3 shows optical coupling characteristic curves with respect to the length of the optical coupling region of the wavelength-selective optical coupler of such a device. As shown in FIG. 3, the coupling ratios for wavelength 1 and wavelength 2 periodically vary according to the length of the optical coupling region, as indicated by curves 201 and 202, respectively. Therefore, for wavelength selectivity, the device is fabricated to satisfy the condition 203 of FIG. 3 so that coupling is maximized at wavelength 1 and minimized at wavelength 2.

However, this method has several technical problems. First, in order to satisfy the condition in which the coupling ratio at wavelength 2 is minimized when the coupling ratio at wavelength 1 is maximized, the optical fiber must be polished to a greater degree and the device must be fabricated with a longer optical coupling region, which entails an increase in insertion loss and a decrease in fabrication efficiency. In particular, because insertion loss increases greatly when the degree of polishing for optical coupling reaches a level at which the optical fiber core structure is altered, increasing the degree of polishing may greatly reduce yield.

Second, even when a wavelength-selective optical coupler is fabricated by matching coupling conditions between the multi-core optical fiber and the coupling optical fiber to optimum conditions, wavelength selectivity is fundamentally limited by optical fiber propagation characteristics determined during manufacture of the optical fiber. Due to these limitations, it is difficult to fabricate a high-performance, high-yield wavelength-selective coupler.

The loss of coupled light in an actually fabricated device was about 1.5 dB to 2.5 dB, which is somewhat large for practical application.

References
- [Patent Document 1]: U.S. Patent No. US5,150,439, "Simplified WDM Fused Fiber Coupler Design"
- [Patent Document 2]: U.S. Patent No. US4,556,279, "Passive Fiber Optic Multiplexer"
- [Patent Document 3]: U.S. Patent No. US5,625,728, "Method of coupling a multi-core optical fiber to a plurality of single-core optical fibers"
- [Patent Document 4]: Japanese patent JP7161985
- [Patent Document 5]: U.S. Patent Application Publication No. US2022/019542 A1, "Optical coupler and optical amplifier"
- [Non-Patent Document 1]: M. N. Mclandrich et al., Polarization Independent Narrow Channel Wavelength Division Multiplexing Fiber Couplers for 1.55 µm, Journal of Lightwave Technology, Vol. 9, No. 4, p. 442 (1991)
- [Non-Patent Document 2]: Richardson, D., Fini, J. & Nelson, L., "Space-division multiplexing in optical fibres," Nature Photon. 7, 354-362 (2013). https://doi.org/10.1038/nphoton.2013.94
- [Non-Patent Document 3]: J. Sakaguchi et al., "19-core MCF transmission system using EDFA with shared core pumping coupled via free-space optics," Opt. Express 22, 90-95 (2014), https://doi.org/10.1364/OE.22.000090
- [Non-Patent Document 4]: Y. Wakayama et al., "FIFO-less Core-pump Combiner for Multicore Fiber Amplifier," in Optical Fiber Communication Conference (OFC) 2021 (2021), paper M3D.3, Optical Publishing Group, Jun. 2021, p. M3D.3, doi: 10.1364/OFC.2021.M3D.3.

### [DISCLOSURE OF THE INVENTION]

### [TECHNICAL PROBLEM]

The present invention proposes an optical device that has lower loss and is easier to manufacture than the conventional side-polished wavelength-selective optical coupler mentioned above.

### [TECHNICAL SOLUTION]

While a conventional invention fabricates an optical coupler using a coupling optical fiber having the same core optical propagation characteristics as a multi-core optical fiber, the device of the present invention is characterized by fabricating and using a coupling optical fiber having optical propagation characteristics different from those of a core of the multi-core optical fiber. Here, different optical propagation characteristics means that the characteristics of a change in an optical propagation constant with respect to wavelength are different.

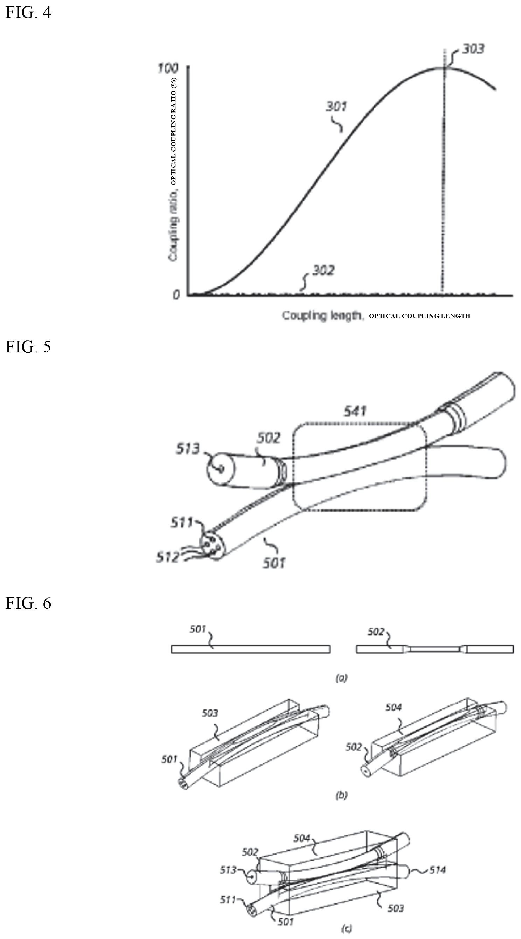

FIG. 4 shows an optical coupling characteristic curve with respect to the length of the optical coupling region of the wavelength-selective optical coupler according to the present invention. That is, when the propagation constants of two optical fibers match at a wavelength for optical coupling (wavelength 1) and greatly differ at a wavelength at which optical coupling is to be avoided (wavelength 2), the optical coupling ratio with respect to the optical coupling length has characteristics as shown in FIG. 4. In particular, as shown in a coupling curve 302 for wavelength 2, the coupling ratio 302 for wavelength 2 has a characteristic of periodically varying between 0 and a small coupling-ratio value. Accordingly, it is much easier to determine a condition 303 that can maximize wavelength selectivity than in the conventional art.

The propagation constant β in an optical fiber for light having a wavelength λ can be written as β = 2πn_eff/λ, where n_eff is an effective refractive index of the optical fiber for light of the corresponding wavelength. Therefore, the degree of matching of propagation constants can be explained in terms of the degree of matching of effective refractive indices at the corresponding wavelength, and detailed technical matters will now be described using the effective refractive index.

Optical coupling occurs in a region having a certain length in the propagation direction, and the length of this optical coupling region is in a range from several hundred micrometers to several millimeters in the device according to the invention. Therefore, an upper limit of a difference in effective refractive index at a wavelength (wavelength 1) at which high optical coupling occurs is determined by considering whether optical coupling of 90% or more can be achieved in a short optical coupling region, and it is preferable that the difference in effective refractive index at wavelength 1 between the two optical fibers be 0.0004 or less. In this case, a reduction in the coupling ratio caused by a phase difference while propagating through the optical coupling region can be controlled within a practical range. In addition, a lower limit of a difference in effective refractive index at another wavelength (wavelength 2) is determined by considering whether the magnitude of optical coupling can be suppressed to 10% or less when the length of the optical coupling region is long, and it is preferable that the difference in refractive index at wavelength 2 between the two optical fibers be 0.0008 or more.

In most cases, an optical fiber manufacturer and an optical fiber device manufacturer are not the same, and in such cases, there are often no combinations of optical fibers that satisfy the above-described matching of effective refractive indices. Therefore, as another technique, the present invention additionally proposes a method of changing optical characteristics of a portion, where optical coupling occurs, of an optical fiber to be coupled to the multi-core optical fiber (coupling optical fiber), so that the effective refractive index at the wavelength to be optically coupled matches or approaches the effective refractive index in the multi-core optical fiber.

FIG. 5 schematically illustrates the device according to the present invention. However, the number of cores and the like shown in the drawings are merely for explanation and do not limit the scope of the invention.

Unlike a device according to the prior art, the wavelength-selective optical coupler according to the present invention is characterized in that optical coupling is produced using a combination of optical fibers in which, at an optical coupling wavelength, the effective refractive index of a core of the multi-core optical fiber and the effective refractive index of a corresponding core of the coupling optical fiber are equal within 0.0004, and in other wavelength regions the effective refractive indices differ by 0.0008 or more.

In the multi-core optical fiber 501 of FIG. 5, a side surface close to a core 511 in which optical coupling is to occur is polished, and a side surface of a portion of the coupling optical fiber 502 in which optical coupling is to occur is also polished. However, the degree of side polishing is at a level that does not deform a corresponding core structure of each optical fiber to be used for coupling. In the coupling region 541, the side-polished portions of the respective optical fibers are brought into close contact with each other and fixed by a mechanical method or with an adhesive.

In addition, for the purpose of improving the wavelength selectivity of the device, the coupling optical fiber 502 may have an optical coupling region in which the optical characteristics are changed in a direction that increases the degree of matching of the effective refractive indices at the optical coupling wavelength.

Various methods may be used as the above-described methods of changing optical characteristics, including a method of changing the propagation constant by reducing the diameter through melting and stretching the optical fiber at a high temperature using a gas heater, laser, electric discharge, or the like; a method of changing the refractive index by inducing diffusion of constituent materials of the optical fiber at a high temperature; a method of changing the refractive index using ultraviolet light; and a method of changing the effective refractive index by forming an optical fiber grating.

### [EFFECTS OF THE INVENTION]

The device according to the present invention has the advantage that high wavelength selectivity and low insertion loss can be easily achieved, compared to a device according to the conventional invention.

### [BRIEF DESCRIPTION OF THE DRAWINGS]

FIG. 1: Main part of a wavelength-selective optical coupler according to the prior art
FIG. 2: Cross-section of the main part of the wavelength-selective optical coupler according to the prior art
FIG. 3: Optical coupling characteristic curve with respect to a length of the optical coupling region of the wavelength-selective optical coupler according to the prior art
FIG. 4: Optical coupling characteristic curve with respect to a length of the optical coupling region of the wavelength-selective optical coupler according to the present invention
FIG. 5: Conceptual configuration diagram of a device according to the present invention
FIG. 6: Embodiment of the invention

### Description of reference numerals:

101: Multi-core optical fiber
102: Coupling optical fiber
111: Core of a multi-core optical fiber to be used for optical coupling
112: Core of a multi-core optical fiber not to be used for optical coupling
113: Core of a coupling optical fiber to be used for optical coupling
CSV: Cross-sectional view of region A-A'
131: Light of wavelength 2 where optical coupling occurs minimally
132: Light of wavelength 1 where optical coupling occurs maximally
141: Optical coupling region
201: Optical coupling characteristic curve for wavelength 1 of a device according to the prior art
202: Optical coupling characteristic curve for wavelength 2 of a device according to the prior art
203: Optical coupling length selected to optimize wavelength selectivity
301: Optical coupling characteristic curve for wavelength 1 of a device according to the present invention
302: Optical coupling characteristic curve for wavelength 2 of a device according to the present invention
303: Optical coupling length selected to optimize wavelength selectivity
501: Multi-core optical fiber
502: Coupling optical fiber
503, 504: Optical fiber fixing blocks
511: Core of a multi-core optical fiber to be used for optical coupling
512: Core of a multi-core optical fiber not to be used for optical coupling
513: Core of a coupling optical fiber to be used for optical coupling
514: Core to be used for optical coupling measurement
541: Optical coupling region

### [BEST MODE FOR CARRYING OUT THE INVENTION]

The embodiment described herein is a wavelength-selective optical coupler using a multi-core optical fiber having four cores (hereinafter, a 4-core optical fiber).

Here, the wavelength-selective optical coupler was designed and fabricated so that signal light having a wavelength of 1550 nm propagates through the 4-core optical fiber, and separate light having a wavelength of 980 nm enters through a separate single-mode optical fiber and is coupled to and propagates through a specific core located nearby. The main structure of a coupling portion is similar to that of FIG. 5, and a manufacturing process is schematically shown in FIG. 6.

First, a multi-core optical fiber 501 and a coupling optical fiber 502 were prepared. In particular, as the coupling optical fiber, an optical fiber having a higher numerical aperture (NA) than a conventional communication optical fiber was selected, and a high-temperature tapering process (a process of melting and stretching an optical fiber at a high temperature) was used to reduce the diameter of a region having a length of about 10 mm to 80 µm, so that the optical propagation constant at a wavelength of 980 nm matched the propagation constant of the multi-core optical fiber within 0.0002. In this case, the difference in effective refractive index at the wavelength of 1550 nm was measured to be 0.001 or more. Reference numeral 502 in FIG. 6(a) conceptually represents the coupling optical fiber that has undergone the tapering process.

Next, the two optical fibers were fixed to respective blocks 503 and 504 having curved grooves and polished together with the blocks, so that the outermost edge of the core of each optical fiber to be used for optical coupling was at a distance of about 5 µm or less from the polished surface (FIG. 6(b)).

Next, as illustrated in FIG. 6(c), the polished surfaces of the two optical-fiber blocks were brought into close contact with each other. The 980-nm light was input to the core 513 of the coupling optical fiber 502, the relative positions of the two blocks were adjusted to optimize the 980-nm light output from the opposite end of the core 511 of the multi-core optical fiber 501, and the blocks were fixed using epoxy.

For the fabricated wavelength-selective optical coupler, the insertion loss for 1550-nm light input to the core 511 of the multi-core optical fiber was 0.3 to 0.5 dB, and the insertion loss for 980-nm light, which is light at the coupling wavelength, was measured to be about 0.04 to 0.7 dB. This value is significantly lower than the insertion loss (1.5 to 2.5 dB) of a conventional device, and is at a level that can be practically applied to actual optical systems.

Therefore, when the device according to the present invention is applied to an optical communication system, communication quality can be improved by reducing optical loss.

### [MODES FOR CARRYING OUT THE INVENTION]

In the above embodiment, a case has been described in which, when the effective refractive index of the core to be used for coupling in the multi-core optical fiber and the effective refractive index of the core of the coupling optical fiber do not match at a desired wavelength, the effective refractive index of the coupling optical fiber is changed through the tapering process and the device is fabricated by optical coupling. However, the present invention does not exclude a case in which the effective refractive index of the multi-core optical fiber core at a target wavelength matches the effective refractive index of the coupling optical fiber core within a specified value (0.0002). In this case, wavelength-selective optical coupling can be implemented by using a coupling optical fiber that has not undergone the tapering process and by performing the same process as in the above embodiment. In addition, the present invention can be applied to fabrication of a wavelength-selective optical coupler that operates in various wavelength regions, including the 1550-nm/980-nm wavelength region.

In addition, although a 4-core optical fiber was described as an example of the multi-core optical fiber in the above embodiment, the present invention can be applied to implement a wavelength-selective optical coupler using a multi-core optical fiber having 2 cores, 6 cores, or 7 cores.

### [INDUSTRIAL APPLICABILITY]

The wavelength-selective optical coupling device according to the present invention can be used to introduce optical pump light into a multi-core optical fiber with low loss in a multi-core optical fiber amplifier. In addition, the device can be used for the purpose of combining or separating signal light of different wavelengths in a sensor using a multi-core optical fiber.

### [SEQUENCE LISTING]

Not applicable.

## Claims

1. A wavelength-selective optical coupling device, comprising:
a multi-core optical fiber; and a coupling optical fiber disposed in proximity to the multi-core optical fiber and configured to couple or separate light at a predetermined wavelength,
wherein the multi-core optical fiber is side-polished without changing a core structure thereof, and the coupling optical fiber is side-polished to an extent that a structure of a core to be used for optical coupling is not changed,
wherein, in an optical coupling region in which polished portions of the two optical fibers are brought into close contact, the wavelength-selective optical coupling device is configured to cause optical coupling of 90% or more in a first wavelength region and to cause optical coupling of 10% or less in a second wavelength region different from the first wavelength region, and
wherein, in the first wavelength region, a difference between an effective refractive index of a core of the multi-core optical fiber and an effective refractive index of a corresponding core of the coupling optical fiber is 0.0004 or less, and, in the second wavelength region, a difference between the effective refractive indices is 0.0008 or more.

2. The wavelength-selective optical coupling device according to claim 1, wherein, in the first wavelength region, the coupling optical fiber has an effective refractive index at a portion to be used for coupling that differs from an effective refractive index at an input/output portion of the coupling optical fiber.

3. The wavelength-selective optical coupling device according to claim 2, wherein the optical coupling region of the coupling optical fiber is a region in which the effective refractive index in the first wavelength region has been changed by melting and stretching the same coupling optical fiber at a high temperature.

4. The wavelength-selective optical coupling device according to claim 2, wherein the optical coupling region of the coupling optical fiber is a region in which the effective refractive index in the first wavelength region has been changed by heat-treating the same coupling optical fiber at a high temperature to induce diffusion of a material in the optical fiber.

5. The wavelength-selective optical coupling device according to claim 2, wherein the optical coupling region of the coupling optical fiber is a region in which the effective refractive index in the first wavelength region has been changed by forming an optical fiber grating in the same coupling optical fiber.

6. The wavelength-selective optical coupling device according to claim 1, wherein the coupling optical fiber is a single-core optical fiber.

7. The wavelength-selective optical coupling device according to claim 1, wherein the coupling optical fiber is a multi-core optical fiber.
